# EUROPÄISCHE PATENTSCHRIFT

(11) **EP 1 842 729 B1**
(45) Veröffentlichungstag und Bekanntmachung des Hinweises auf die Patenterteilung: **18.06.2008**
(21) Anmeldenummer: 06007410.1
(22) Anmeldetag: 07.04.2006
(51) Int. Cl.: B60R 16/02

(54) **Einrichtung zur Ansteuerung wenigstens eines Relais**
Device for controlling at least a relay
Dispositif pour le contrôle d'au moins un relais

(43) Veröffentlichungstag der Anmeldung: 10.10.2007
(73) Patentinhaber: Delphi Technologies, Inc., Troy, Michigan 48007 (US)
(72) Erfinder: Bergmann, Jürgen, 45665 Recklinghausen (DE)
(74) Vertreter: Manitz, Finsterwald & Partner GbR

(56) Entgegenhaltungen:
- DE-A1- 4 227 165
- US-A- 5 777 894

## Beschreibung

Die Erfindung betrifft eine Einrichtung zur Ansteuerung wenigstens eines insbesondere in der Zentralelektrik eines Kraftfahrzeugs vorgesehenen Relais mit einer gepulsten Spannung.

Das Dokument DE 42 27 165 A zeigt dem Oberbegriff des Anspruchs 1.

Kraftfahrzeuge sind in den meisten Fällen mit einer so genannten Zentralelektrik versehen, die der Verteilung der elektrischen Energie dient. Eine solche Zentralelektrik enthält meistens Sicherungen, Relais und andere elektrische und/oder elektronische Komponenten, an die insbesondere bezüglich der Packungsdichte und der Umgebungstemperatur in der Regel hohe Anforderungen gestellt werden.

Dabei besteht eine der strengsten Anforderungen an eine solche Zentralelektrik darin, den durch Verlustleistung erzeugten zusätzlichen Temperaturanstieg innerhalb der Zentralelektrik zu minimieren. Eine der Hauptquellen für Verlustleistung stellen die Relaiswicklungen dar. So besitzt beispielsweise ein Relais mit einem Wicklungswiderstand von 60 Ohm bei einer Versorgungs- oder Betriebsspannung von 13,5 V eine Verlustleistung von 3 Watt. Enthält eine Zentralelektrik beispielsweise 15 Relais, so würde die Verlustleistung in dem Fall, dass sämtliche Relais aktiv sind 45 Watt betragen, was beispielsweise der Leistung eines Lötkolbens entspricht.

Der Erfindung liegt die Aufgabe zugrunde, eine verbesserte Einrichtung der eingangs genannten Art zu schaffen, mit der die Verlustleistung insbesondere in der Zentralelektrik eines Kraftfahrzeugs auf einfache und zuverlässige Weise reduziert werden kann.

Diese Aufgabe wird erfindungsgemäß dadurch gelöst, dass sie einen elektronischen Speicher (16) umfasst, der einen Parameterblock für die Ansteuerung unterschiedlicher Relaistypen in deren Haltephase enthält, und dass ein jeweiliges Relais (14) in der Haltephase in Abhängigkeit von dessen Typ entsprechend dem Parameterblock ansteuerbar ist.

Die Ansteuerung eines jeweiligen Relais in der Haltephase über eine pulsweitenmodulierte Versorgungsspannung erfolgt also in Abhängigkeit von einem in einem elektronischen Speicher enthaltenen Parameterblock, dessen Parameter unterschiedlichen Relaistypen zugeordnet sind. Dabei können die Parameter insbesondere so gewählt sein, dass sich für die betreffenden Relaistypen in der Haltephase unter Aufrechterhaltung einer zuverlässigen Funktion eine minimale Verlustleistung ergibt. Die betreffenden Parameter können insbesondere von den Herstellern der verschiedenen Relaistypen bereitgestellt werden, was beispielsweise in Form eines Standardformats erfolgen kann. Es ist dann beispielsweise über den Bordcomputer, d.h. die Steuereinrichtung des Kraftfahrzeugs möglich, über die Parameter eine vorgebbare Ansteuerung der Relais mit gepulster Spannung zu reproduzieren, bei der die vom Hersteller der Relais garantierten Bedingungen, wie z.B. minimale Verlustleistung bei noch zuverlässigem Haltebetrieb eingehalten werden.

Bevorzugt erfolgt die gepulste Ansteuerung eines jeweiligen Relais so, dass das Relais je nach Relaistyp mit einer durch den Parameterblock definierten mittleren Spannung beaufschlagt wird.

Dabei sind die mittleren Spannungen für die unterschiedlichen Relaistypen vorteilhafterweise jeweils so gewählt, dass ein jeweiliges Relais mit der geringstmöglichen Leistung beaufschlagt wird, bei der es noch sicher im Haltezustand verbleibt.

Bei einer bevorzugten praktischen Ausführungsform der erfindungsgemäßen Einrichtung enthält der Speicher einen Parameterblock, der für die Ansteuerung unterschiedlicher Relaistypen in deren Haltephase bei vorgebbarer Pulswiederholungsrate bestimmte Pulsweiten in Abhängigkeit von der Betriebsspannung repräsentiert, wobei ein jeweiliges Relais in Abhängigkeit vom betreffenden Relaistyp und in Abhängigkeit von der jeweiligen aktuellen Betriebsspannung in seiner Haltephase mit einer durch den Parameterblock vorgegebenen Pulsweite ansteuerbar ist. Dabei entspricht die erzeugte Pulsamplitude zumindest im Wesentlichen jeweils der aktuellen Betriebsspannung.

Bevorzugt sind die Pulsweiten für die unterschiedlichen Relaistypen jeweils so gewählt, dass ein jeweiliges Relais mit der geringstmöglichen Leistung beaufschlagt wird, bei der es noch sicher im Haltezustand verbleibt.

Bei einer zweckmäßigen praktischen Ausführungsform der erfindungsgemäßen Einrichtung sind Mittel zur Erfassung der jeweiligen aktuellen Betriebsspannung vorgesehen, wobei diese Mittel bevorzugt für eine kontinuierliche oder periodische Erfassung der jeweiligen aktuellen Betriebsspannung ausgeführt sind.

Für die jeweils erfasste aktuelle Betriebsspannung und den jeweiligen Relaistyp kann dann dem im Speicher enthaltenen Parameterblock beispielsweise die entsprechende Pulsweite entnommen werden, um das betreffende Relais mit einer entsprechenden gepulsten Spannung anzusteuern.

Bevorzugt ist der elektronische Speicher einer elektronischen Steuereinrichtung insbesondere eines Kraftfahrzeugs zugeordnet. Über diese elektronische Steuereinrichtung können dann auch die jeweiligen Informationen aus dem Speicher bzw. Parameterblock abgerufen und zur Ansteuerung der Relais herangezogen werden.

Zweckmäßigerweise ist das wenigstens eine Relais über einen Treiber ansteuerbar.

Dabei kann ein solcher Treiber der elektronischen Steuereinrichtung zugeordnet oder auch getrennt von der elektronischen Steuereinrichtung vorgesehen und über diese ansteuerbar sein.

Auch die das Relais umfassende Zentralelektrik kann getrennt von der Steuereinrichtung vorgesehen oder in der Steuereinrichtung integriert sein.

Gemäß einer bevorzugten praktischen Ausführungsform der erfindungsgemäßen Einrichtung ist der in dem elektronischen Speicher enthaltene Parameterblock für die Ansteuerung unterschiedlicher Relaistypen in einem vorgegebenen Temperaturbereich vorgesehen. Dieser Temperaturbereich umfasst zweckmäßigerweise sämtliche Temperaturen, bei denen die Relais normalerweise betrieben werden.

Grundsätzlich sind jedoch auch solche Ausführungsformen der erfindungsgemäßen Einrichtung denkbar, bei denen der in dem elektronischen Speicher enthaltene Parameterblock für die Ansteuerung unterschiedlicher Relaistypen bei unterschiedlichen Temperaturen vorgesehen ist und ein jeweiliges Relais in der Haltephase in Abhängigkeit von dessen Typ und der jeweiligen aktuellen Betriebstemperatur entsprechend dem Parameterblock ansteuerbar ist.

Von Vorteil ist hierbei insbesondere eine solche Ausführung, bei der in dem elektronischen Speicher enthaltene Parameterblock für die Ansteuerung unterschiedlicher Relaistypen bei unterschiedlichen Betriebsspannungen und unterschiedlichen Temperaturen vorgesehen ist und ein jeweiliges Relais in der Haltephase in Abhängigkeit von dessen Typ, von der jeweiligen aktuellen Betriebsspannung und der jeweiligen aktuellen Betriebstemperatur entsprechend dem Parameterblock ansteuerbar ist. In diesem Fall können die Parameter des Parameterblocks also zusätzlich bestimmten Betriebstemperaturen oder engeren Temperaturteilbereichen sein. Auch insoweit können die betreffenden Informationen insbesondere wieder von den Herstellern der unterschiedlichen Relaistypen bereitgestellt werden.

Um die richtigen Parameter aus dem Speicher abrufen zu können, sind vorteilhafterweise sowohl Mittel zur Erfassung der jeweiligen aktuellen Betriebsspannung als auch Mittel zur Erfassung der jeweiligen aktuellen Betriebstemperatur vorgesehen. Dabei sind diese Mittel vorteilhafterweise für eine kontinuierliche oder periodische Erfassung der jeweiligen aktuellen Betriebsspannung bzw. für eine kontinuierliche oder periodische Erfassung der jeweiligen aktuellen Betriebstemperatur ausgeführt.

Zweckmäßigerweise sind mehrere insbesondere der Zentralelektrik eines Kraftfahrzeugs zugeordnete Relais vorgesehen.

Im letzteren Fall kann es insbesondere auch von Vorteil sein, wenn Mittel zur Erfassung der Anzahl der jeweils aktuell angesteuerten Relais vorgesehen sind und die Ansteuerung der Relais in der Haltephase zudem in Abhängigkeit von dieser Anzahl erfolgt.

Wird momentan beispielsweise eine geringere Anzahl von Relais angesteuert, so ist entsprechend auch die Gesamtverlustleistung geringer. Für die angesteuerten Relais kann dann zur Erhöhung der Funktionssicherheit die mittlere Spannung, mit der diese Relais beaufschlagt werden, etwas angehoben werden. Ist dagegen die Anzahl der momentan angesteuerten Relais relativ groß, so muss die mittlere Spannung, mit der die betreffenden Relais angesteuert werden, möglichst gering gehalten werden, wobei, wie bereits erwähnt, die Relais jedoch noch sicher im Haltezustand verbleiben sollen.

Üblicherweise sind Relais für einen Betrieb in einem großen Versorgungsspannungsbereich ausgelegt. Dies bedeutet, dass ein Relais beispielsweise mit einer Versorgungsspannung bis zu einem unteren Wert von 7 V korrekt betrieben werden kann und nach erfolgtem Anziehen mit sogar noch geringeren Werten zuverlässig im Haltezustand gehalten werden kann.

Betrachtet man beispielsweise einen Versorgungsspannungsbereich zwischen etwa 16 und etwa 7 V, so würde sich bei einer Betriebsspannung von 16 V eine Verlustleistung von 100 % und bei einer Versorgungsspannung von 7 V eine Verlustleistung von 20 % ergeben, und zwar unabhängig vom Widerstand der Relaiswicklung und allein abhängig von der jeweiligen Versorgungsspannung. Würde man die Versorgungsspannung also beispielsweise im Bereich des minimalen Wertes von z.B. 7 V halten, käme dies einer Reduzierung der Verlustleistung auf 20 %, bezogen auf eine maximale Versorgungsspannung von 16 V, oder einer Reduzierung der Verlustleistung auf 27 %, bezogen auf eine maximale Versorgungsspannung von 13,5 V gleich.

Die Verlustleistung kann nun mit einfachen Mitteln dadurch im Wesentlichen konstant gehalten werden, dass die Relais entsprechend durch eine pulsweitenmodulierte Spannung beaufschlagt werden. Ein jeweiliges Relais wird also mit einer pulsweitenmodulierten Versorgungsspannung beaufschlagt, deren Mittelwert einem minimalen Spannungswert entspricht, bei dem sich eine minimale Verlustleistung ergibt.

Bisher wurden die Relais der Zentralelektrik eines Kraftfahrzeugs nicht auf diese Art und Weise angesteuert. Ein Grund dafür mag darin liegen, dass der Treiber in den meisten Fällen Teil der dem Bordcomputer zugeordneten Steuereinrichtung ist und die Relais in einer davon getrennten Zentralelektrik angeordnet sind. Die beiden sind über einen Kabelstrang miteinander verbunden. Häufig stammen die Relais auch von verschiedenen Herstellern, so dass die Frage der Garantie eine Rolle spielt.

Mit der Erfindung wird nun eine Norm oder Vorschrift zur Kombination der Herstellerseite und der Anwenderseite des Systems geschaffen. Diese Norm umfasst einen Algorithmus, der in einer Standardsoftware festgelegt sein kann. Dieser Algorithmus beschreibt in Abhängigkeit von für einen jeweiligen Relaistyp spezifischen Parametern in Kombination mit der Information über die Versorgungsspannung ein pulsweitenmoduliertes Signal. Die betreffende Software könnte als gemeinsamer Standard eingeführt werden und von den Relaisherstellern zur Validierung deren Relais sowie als integrierter Teil der Software des Bordcomputers verwendet werden. Damit kann der Relaishersteller sämtliche Anwender mit den Parametern seines Relais versorgen. Die betreffenden Parameter könnten in einem Standardformat festgelegt sein. Damit wäre der Bordcomputer in der Lage, beispielsweise mit den Informationen bezüglich der Versorgungsspannung und den Parametern genau die vom Relaishersteller garantierten Ergebnisse zu reproduzieren.

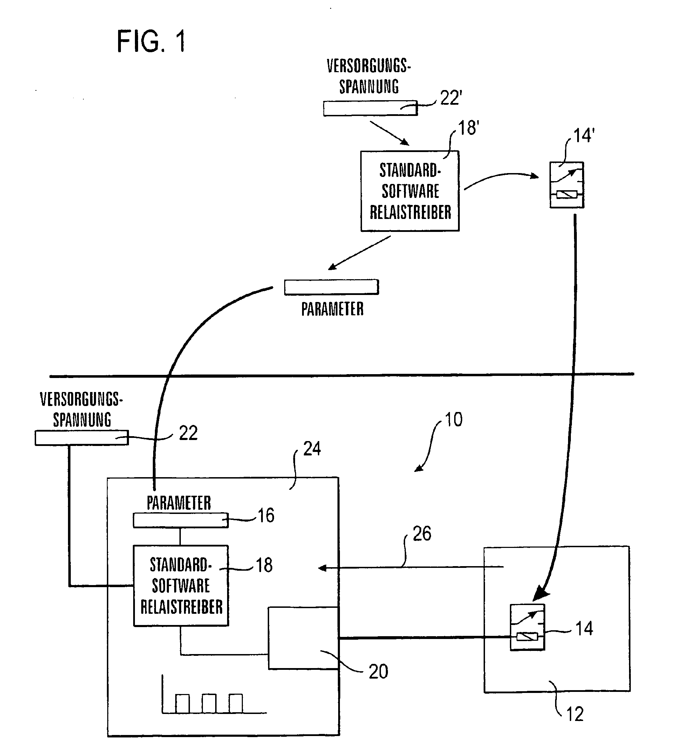

Die Erfindung wird im Folgenden anhand eines Ausführungsbeispiels unter Bezugnahme auf die Zeichnung näher erläutert.

Die einzige Figur in der Zeichnung zeigt in rein schematischer Darstellung eine beispielhafte Ausführungsform einer Einrichtung 10 zur Ansteuerung wenigstens eines beispielsweise in der Zentralelektrik 12 eines Kraftfahrzeugs vorgesehenen Relais 14 mit einer gepulsten Spannung.

Die Einrichtung 10 umfasst einen elektronischen Speicher 16, der einen Parameterblock für die Ansteuerung unterschiedlicher Relaistypen in deren Haltephase enthält. Dabei ist ein jeweiliges Relais 14 in der Haltephase in Abhängigkeit von dessen Typ entsprechend dem Parameterblock ansteuerbar.

Die Einrichtung 10 umfasst ferner eine Standardsoftware 18 für einen Treiber 20, bei dem es sich beispielsweise um einen High-Side- oder Low-Side-Treiber handeln kann. Die Standardsoftware 18 ist Bestandteil einer Steuereinrichtung 24 und hat Zugriff auf den den Parameterblock enthaltenden Speicher 16 sowie zu Informationen über die jeweilige aktuelle Betriebsspannung 22. Zur Erfassung der jeweils aktuellen Betriebsspannung 22 können entsprechende Mittel vorgesehen sein.

Der Treiber 20 wird nun über die Standardsoftware 18 in Abhängigkeit von dem Parameterblock in Speicher 16 und der jeweiligen aktuellen Betriebsspannung 22 mit einer gepulsten Spannung beaufschlagt.

Im vorliegenden Fall enthält der Speicher 16 einen Parameterblock, der für die Ansteuerung unterschiedlicher Relaistypen in deren Haltephase bei vorgebbarer Pulswiederholungsrate bestimmte Pulsweiten in Abhängigkeit von der Betriebsspannung repräsentiert. Ein jeweiliges Relais 14 wird dann in Abhängigkeit vom betreffenden Relaistyp und in Abhängigkeit von der jeweiligen aktuellen Betriebsspannung 22 in seiner Haltephase mit einer durch den Parameterblock vorgegebenen Pulsweite angesteuert. Dabei können die Pulsweiten für die unterschiedlichen Relaistypen insbesondere jeweils so gewählt sein, dass ein jeweiliges Relais 14 mit der geringstmöglichen Leistung beaufschlagt wird, bei der es noch sicher im Haltezustand verbleibt.

Wie der einzigen Figur zudem entnommen werden kann, können die im Speicher 16 der Einrichtung 10 gespeicherten Parameter von den Herstellern der jeweiligen Relais bereitgestellt werden. Dabei validiert ein jeweiliger Relaishersteller sein Relais 14' unter Verwendung derselben Standardsoftware 18' für einen dem Treiber 20 entsprechenden Treiber für verschiedene Betriebsspannungen 22', woraus sich die entsprechenden Parameter ergeben, die dann schließlich im Speicher 16 der Einrichtung 10 gespeichert werden.

Die validierten Parameter beschreiben die Pulsform bzw. die Pulsweite in Abhängigkeit von der Betriebs- oder Versorgungsspannung 22'. Damit kann die den Bordcomputer bildende Steuereinrichtung 24 des betreffenden Kraftfahrzeugs, die im vorliegenden Fall beispielsweise sowohl die Standardsoftware 18 als auch den Speicher 16 und den Treiber 20 umfasst, später exakt die herstellerseitig erhaltenen Ergebnisse reproduzieren.

Falls erforderlich kann, wie durch den Pfeil 26 angedeutet, die aktuelle Betriebsspannung der Relais 14 durch den Bordcomputer, d.h. die Steuereinrichtung 24 gemessen werden.

Die Steuereinrichtung 24 kennt also die jeweils aktuelle Betriebsspannung durch Messung seiner eigenen Spannung, durch Erfassen über einen CAN-Bus (CAN = Controller Area Network) oder dergleichen oder durch Messen der Betriebsspannung der Zentralelektrik 5 über eine getrennte Leitung, falls dies im Hinblick auf die elektromagnetische Verträglichkeit erforderlich ist. Durch Verwendung derselben Standardsoftware und derselben Parameter in der Einrichtung 10 wie beim Relaishersteller kann die Steuereinrichtung 24 die bei der Validierung der Relais erhaltenen Ergebnisse reproduzieren.

Ein jeweiliges Relais 14 ist so ansteuerbar, dass es entweder auf Masse liegt oder mit der Betriebsspannung verbunden ist.

### Bezugszeichenliste

- 10: Einrichtung
- 12: Zentralelektrik
- 14: Relais
- 16: elektrischer Speicher
- 18: Standardsoftware
- 18': Standardsoftware
- 20: Treiber
- 22: aktuelle Betriebsspannung
- 22': Betriebsspannung
- 24: Steuereinrichtung, Bordcomputer
- 26: Pfeil

## Patentansprüche

1. Einrichtung (10) zur Ansteuerung wenigstens eines insbesondere in der Zentralelektrik (12) eines Kraftfahrzeuges vorgesehenen Relais (14) mit einer gepulsten Spannung,
**dadurchgekennzeichnet,**
**dass** sie einen elektronischen Speicher (16) umfasst, der einen Parameterblock für die Ansteuerung unterschiedlicher Relaistypen in deren Haltephase enthält, und dass ein jeweiliges Relais (14) in der Haltephase in Abhängigkeit von dessen Typ entsprechend dem Parameterblock ansteuerbar ist.

2. Einrichtung nach Anspruch 1,
**dadurch gekennzeichnet,**
**dass** die gepulste Ansteuerung eines jeweiligen Relais (14) so erfolgt, dass das Relais (14) je nach Relaistyp mit einer durch den Parameterblock definierten mittleren Spannung beaufschlagt wird.

3. Einrichtung nach Anspruch 2,
**dadurchgekennzeichnet,**
**dass** die mittleren Spannungen für die unterschiedlichen Relaistypen jeweils so gewählt sind, dass ein jeweiliges Relais (14) mit der geringst möglichen Leistung beaufschlagt wird, bei der es noch sicher im Haltezustand verbleibt.

4. Einrichtung nach zumindest einem der vorstehenden Ansprüche,
**dadurch gekennzeichnet,**
**dass** der Speicher (16) einen Parameterblock enthält, der für die Ansteuerung unterschiedlicher Relaistypen in deren Haltephase bei vorgebbarer Pulswiederholungsrate bestimmte Pulsweiten in Abhängigkeit von der Betriebsspannung (22) repräsentiert, und dass ein jeweiliges Relais (14) in Abhängigkeit vom betreffenden Relaistyp und in Abhängigkeit von der jeweiligen aktuellen Betriebsspannung (22) in seiner Haltephase mit einer durch den Parameterblock vorgegebenen Pulsweite ansteuerbar ist.

5. Einrichtung nach Anspruch 4,
**dadurch gekennzeichnet,**
**dass** die Pulsweiten für die unterschiedlichen Relaistypen jeweils so gewählt sind, dass ein jeweiliges Relais (14) mit der geringst möglichen Leistung beaufschlagt wird, bei der es noch sicher im Haltezustand verbleibt.

6. Einrichtung nach zumindest einem der vorstehenden Ansprüche,
**dadurch gekennzeichnet,**
**dass** Mittel zur Erfassung der jeweiligen aktuellen Betriebsspannung (22) vorgesehen sind.

7. Einrichtung nach Anspruch 6,
**dadurch gekennzeichnet,**
**dass** die Mittel für eine kontinuierliche oder periodische Erfassung der jeweiligen aktuellen Betriebsspannung (22) ausgeführt sind.

8. Einrichtung nach zumindest einem der vorstehenden Ansprüche,
**dadurch gekennzeichnet,**
**dass** der elektronische Speicher (16) einer elektronischen Steuereinrichtung (24) insbesondere eines Kraftfahrzeugs zugeordnet ist.

9. Einrichtung nach zumindest einem der vorstehenden Ansprüche,
**dadurch gekennzeichnet,**
**dass** das Relais (14) über einen Treiber (20) ansteuerbar ist.

10. Einrichtung nach Anspruch 9,
**dadurch gekennzeichnet,**
**dass** der Treiber (20) der elektronischen Steuereinrichtung (24) zugeordnet ist.

11. Einrichtung nach Anspruch 9,
**dadurch gekennzeichnet,**
**dass** der Treiber (20) getrennt von der elektronischen Steuereinrichtung (24) vorgesehen und über diese ansteuerbar ist.

12. Einrichtung nach zumindest einem der vorstehenden Ansprüche,
**dadurch gekennzeichnet,**
**dass** die das Relais (14) umfassende Zentralelektrik (12) getrennt von der Steuereinrichtung (24) vorgesehen ist.

13. Einrichtung nach zumindest einem der Ansprüche 1 bis 11,
**dadurch gekennzeichnet,**
**dass** die das Relais (14) umfassende Zentralelektrik (12) in der Steuereinrichtung (24) integriert ist.

14. Einrichtung nach zumindest einem der vorstehenden Ansprüche,
**dadurch gekennzeichnet,**
**dass** der in dem elektronischen Speicher (16) enthaltene Parameterblock für die Ansteuerung unterschiedlicher Relaistypen in einem vorgegebenen Temperaturbereich vorgesehen ist.

15. Einrichtung nach zumindest einem der Ansprüche 1 bis 13,
**dadurch gekennzeichnet,**
**dass** der in dem elektronischen Speicher (16) enthaltene Parameterblock für die Ansteuerung unterschiedlicher Relaistypen bei unterschiedlichen Temperaturen vorgesehen ist und dass ein jeweiliges Relais (14) in der Haltephase in Abhängigkeit von dessen Typ und der jeweiligen aktuellen Betriebstemperatur entsprechend dem Parameterblock ansteuerbar ist.

16. Einrichtung nach zumindest einem der vorstehenden Ansprüche,
**dadurch gekennzeichnet,**
**dass** der in dem elektronischen Speicher (16) enthaltene Parameterblock für die Ansteuerung unterschiedlicher Relaistypen bei unterschiedlichen Betriebsspannungen (22) und unterschiedlichen Temperaturen vorgesehen ist und dass ein jeweiliges Relais (14) in der Haltephase in Abhängigkeit von dessen Typ, von der jeweiligen aktuellen Betriebsspannung (22) und der jeweiligen aktuellen Betriebstemperatur entsprechend dem Parameterblock ansteuerbar ist.

17. Einrichtung nach Anspruch 16,
**dadurch gekennzeichnet,**
**dass** sowohl Mittel zur Erfassung der jeweiligen aktuellen Betriebsspannung (22) als auch Mittel zur Erfassung der jeweiligen aktuellen Betriebstemperatur vorgesehen sind.

18. Einrichtung nach Anspruch 17,
**dadurch gekennzeichnet,**
**dass** die Mittel für eine kontinuierliche oder periodische Erfassung der jeweiligen aktuellen Betriebsspannung (22) bzw. für eine kontinuierliche oder periodische Erfassung der jeweiligen aktuellen Betriebstemperatur ausgeführt sind.

19. Einrichtung nach zumindest einem der vorstehenden Ansprüche,
**dadurch gekennzeichnet,**
**dass** mehrere insbesondere der Zentralelektrik (12) eines Kraftfahrzeuges zugeordnete Relais (14) vorgesehen sind.

20. Einrichtung nach Anspruch 19,
**dadurch gekennzeichnet,**
**dass** Mittel zur Erfassung der Anzahl der jeweils aktuell angesteuerten Relais (14) vorgesehen sind und dass die Ansteuerung der Relais (14) in der Haltephase zudem in Abhängigkeit von dieser Anzahl erfolgt.

## Claims

1. A device (10) for the control of at least one relay (14) with a pulsed voltage, in particular of a relay provided in the central electrical system (12) of a motor vehicle,
**characterized in that**
it includes an electronic memory (16) which contains a parameter block for the control of different relay types in their holding phase; and **in that** a respective relay (14) can be controlled in the holding phase in dependence on its type in accordance with the parameter block.

2. A device in accordance with claim 1, **characterized in that** the pulsed control of a respective relay (14) takes place such that the relay (14) is acted on by a mean voltage defined by the parameter block in dependence on the relay type.

3. A device in accordance with claim 2, **characterized in that** the mean voltages for the different relay types are selected in each case such that a respective relay (14) is acted on by the lowest possible power at which it still remains reliably in the holding state.

4. A device in accordance with at least one of the preceding claims, **characterized in that** the memory (16) contains a parameter block which represents specific pulse widths in dependence on the operating voltage (22) for the control of different relay types in their holding phase at a presettable pulse repetition rate; and **in that** a respective relay (14) can be controlled in its holding phase by a pulse width predetermined by the parameter block in dependence on the respective relay type and in dependence on the respective current operating voltage (22).

5. A device in accordance with claim 4, **characterized in that** the pulse widths for the different relay types are each selected such that a respective relay (14) is acted on by the lowest possible power at which it still remains reliably in the holding state.

6. A device in accordance with at least one of the preceding claims, **characterized in that** means for the detection of the respective current operating parameters (22) are provided.

7. A device in accordance with claim 6, **characterized in that** the means are made for a continuous or periodic detection of the respective current operating voltage (22).

8. A device in accordance with at least one of the preceding claims, **characterized in that** the electronic memory (16) is associated with an electronic control device (24), in particular of a motor vehicle.

9. A device in accordance with at least one of the preceding claims, **characterized in that** the relay (14) can be controlled via a driver (20).

10. A device in accordance with claim 9, **characterized in that** the driver (20) is associated with the electronic control device (24).

11. A device in accordance with claim 9, **characterized in that** the driver (20) is provided separately from the electronic control device (24) and can be controlled via it.

12. A device in accordance with at least one of the preceding claims, **characterized in that** the central electrical system (12) including the relay (14) is provided separately from the control device (24).

13. A device in accordance with at least one of the claims 1 to 11, **characterized in that** the central electrical system (12) including the relay (14) is integrated in the control device (24).

14. A device in accordance with at least one of the preceding claims, **characterized in that** the parameter block contained in the electronic memory (16) is provided for the control of different relay types in a predetermined temperature range.

15. A device in accordance with at least one of the claims 1 to 13, **characterized in that** the parameter block contained in the electronic memory (16) is provided for the control of different relay types at different temperatures; and **in that** a respective relay (14) can be controlled in the holding phase in dependence on its type and on the respective current operating temperature in accordance with the parameter block.

16. A device in accordance with at least one of the preceding claims, **characterized in that** the parameter block contained in the electronic memory (16) is provided for the control of different relay types at different operating voltages (22) and at different temperatures; and **in that** a respective relay (14) can be controlled in the holding phase in dependence on its type, on the respective current operating voltage (22) and on the respective current operating temperature in accordance with the parameter block.

17. A device in accordance with claim 16, **characterized in that** both means are provided for the detection of the respective current operating voltage (22) and means are provided for the detection of the respective current operating temperature.

18. A device in accordance with claim 17, **characterized in that** the means are made for a continuous or periodic detection of the respective current operating temperature (22) or for a continuous or periodic detection of the respective current operating temperature.

19. A device in accordance with at least one of the preceding claims, **characterized in that** a plurality of relays (14) are provided, in particular associated with the central electrical system (12) of a motor vehicle.

20. A device in accordance with claim 19, **characterized in that** means are provided for the detection of the number of the respective currently controlled relays (14); and **in that** the control of the relays (14) in the holding phase additionally takes place in dependence on this number.

## Revendications

1. Dispositif (10) pour commander au moins un relais (14) prévu en particulier dans la centrale électrique (12) d'un véhicule automobile, avec une tension pulsée,
**caractérisé**
**en ce qu'**il comprend une mémoire électronique (16) qui contient un bloc de paramètres pour la commande de différents types de relais dans leur phase de maintien, et en ce qu'un relais (14) respectif peut être commandé dans la phase de maintien en fonction de son type, conformément au bloc de paramètres.

2. Dispositif selon la revendication 1,
**caractérisé**
**en ce que** la commande pulsée d'un relais (14) respectif s'effectue en ce que le relais (14) reçoit, suivant le type de relais, une tension moyenne définie par le bloc de paramètres.

3. Dispositif selon la revendication 2,
**caractérisé**
**en ce que** les tensions moyennes pour les différents types de relais sont choisies chaque fois de manière qu'un relais (14) respectif reçoive la plus faible puissance possible pour laquelle il reste encore sûrement à l'état de maintien.

4. Dispositif selon l'une au moins des revendications précédentes,
**caractérisé**
**en ce que** la mémoire (16) contient un bloc de paramètres qui représente, pour la commande de différents types de relais dans leur phase de maintien, pour des fréquences de répétition d'impulsions à prédéfinir, des largeurs d'impulsion déterminées, en fonction de la tension de service (22), et en ce qu'un relais (14) respectif peut être commandé avec une largeur d'impulsion prédéfinie par le bloc de paramètres, en fonction du type de relais concerné et en fonction de la tension de service (22) actuelle respective dans sa phase de maintien.

5. Dispositif selon la revendication 4,
**caractérisé**
**en ce que** les largeurs d'impulsion pour les différents types de relais sont choisies chaque fois de manière qu'un relais (14) respectif reçoive la plus faible puissance possible pour laquelle il reste encore sûrement à l'état de maintien.

6. Dispositif selon l'une au moins des revendications précédentes,
**caractérisé**
**en ce que** des moyens sont prévus pour relever la tension de service (22) actuelle respective.

7. Dispositif selon la revendication 6,
**caractérisé**
**en ce que** les moyens sont réalisés pour un relevé continu ou périodique de la tension de service (22) actuelle respective.

8. Dispositif selon l'une au moins des revendications précédentes,
**caractérisé**
**en ce que** la mémoire électronique (16) est associée à un dispositif de commande électronique (24) en particulier d'un véhicule automobile.

9. Dispositif selon l'une au moins des revendications précédentes,
**caractérisé**
**en ce que** le relais (14) peut être commandé par un excitateur (20).

10. Dispositif selon la revendication 9,
**caractérisé**
**en ce que** l'excitateur (20) est associé au dispositif de commande électronique (24).

11. Dispositif selon la revendication 9,
**caractérisé**
**en ce que** l'excitateur (20) est prévu séparément du dispositif de commande électronique (24) et peut être commandé à travers celui-ci.

12. Dispositif selon l'une au moins des revendications précédentes,
**caractérisé**
**en ce que** la centrale électrique (12), comprenant le relais (14), est prévue séparément du dispositif de commande (24).

13. Dispositif selon l'une au moins des revendications 1 à 11,
**caractérisé**
**en ce que** la centrale électrique (12), comprenant le relais (14), est intégrée dans le dispositif de commande (24),

14. Dispositif selon l'une au moins des revendications précédentes,
**caractérisé**
**en ce que** le bloc de paramètres, contenu dans la mémoire électronique (16), est prévu pour la commande de différents types de relais dans une gamme de températures prédéfinie.

15. Dispositif selon l'une au moins des revendications 1 à 13,
**caractérisé**
**en ce que** le bloc de paramètres, contenu dans la mémoire électronique (16), est prévu pour la commande de différents types de relais à des températures différentes, et en ce qu'un relais (14) respectif peut être commandé dans la phase de maintien, en fonction de son type et de la température de service actuelle respective, conformément au bloc de paramètres.

16. Dispositif selon l'une au moins des revendications précédentes,
**caractérisé**
**en ce que** le bloc de paramètres, contenu dans la mémoire électronique (16), est prévu pour la commande de différents types de relais à des tensions de service (22) différentes et des températures différentes, et en ce qu'un relais (14) respectif peut être commandé dans la phase de maintien, en fonction de son type, de la tension de service (22) actuelle respective et de la température de service actuelle respective, conformément au bloc de paramètres.

17. Dispositif selon la revendication 16,
**caractérisé**
**en ce qu'**il est prévu des moyens pour relever la tension de service (22) actuelle respective ainsi que des moyens pour relever la température de service actuelle respective.

18. Dispositif selon la revendication 17,
**caractérisé**
**en ce que** les moyens sont réalisés pour un relevé continu ou périodique de la tension de service (22) actuelle respective ou pour un relevé continu ou périodique de la température de service actuelle respective.

19. Dispositif selon l'une au moins des revendications précédentes,
**caractérisé**
**en ce que** plusieurs relais (14), associés en particulier à la centrale électrique (12) d'un véhicule automobile, sont prévus.

20. Dispositif selon la revendication 19,
**caractérisé**
**en ce qu'**il est prévu des moyens pour relever le nombre de relais (14) commandés à l'instant et en ce que la commande des relais (14) dans la phase de maintien s'effectue en outre en fonction de ce nombre.
